# EUROPEAN PATENT APPLICATION

(11) **EP 1 530 137 A1**
(43) Date of publication of application: **11.05.2005**
(21) Application number: 03025833.9
(22) Date of filing: 10.11.2003
(51) Int. Cl.: G06F 17/50

(54) **Simulation system and computer-implemented method for simulation and verifying a control system**

(71) Applicant: ROBERT BOSCH GMBH, 70442 Stuttgart (DE)
(72) Inventor: Strehl, Karsten, 70376 Stuttgart (DE)

(57) **Abstract**

A simulation system for computer-implemented simulation and verification of a control system for dynamic reconfiguration of a real time operating system on a rapid prototyping system and a respective method.

## Description

The present invention relates to a simulation system for computer-implemented simulation and verification of a control system under development as well as a computer-implemented method for simulating and verifying a control system under development. More particularly, the present invention relates to the so-called rapid prototyping of a control system for dynamic systems such as vehicles, aircrafts, ships, etc. as well as parts thereof. Further, the present invention relates to a computer program product with a computer-readable medium and a computer program stored on the computer-readable medium with program coding means which are suitable for carrying out such a process when the computer program is run on a computer.

### State of the Art

Rapid prototyping of control systems is commonly used in the automotive industry, aviation, etc. for early verification of the correct functional and real-time behavior of a control system under development. Like this, control strategies and algorithms for dynamic systems such as vehicles or parts thereof can be tested under real-world conditions without requiring the existence of the final implementation of the control loop.

A rapid prototyping system usually is characterized as being a hybrid hardware/software system, in general consisting of the following main components:
- a simulation target, consisting of one or several simulation processors with corresponding memory modules, each running basically a portion of a model of the control system under development,
- input interfaces composed of signals being fed by the plant (the outside world being controlled),
- output interfaces composed of signals feeding the plant, and
- communication interfaces for downloading the module from a host (often a personal computer) onto the simulation target, controlling the simulation experiment (start and stop commands, etc.), measuring and calibrating module signals and parameters, respectively.

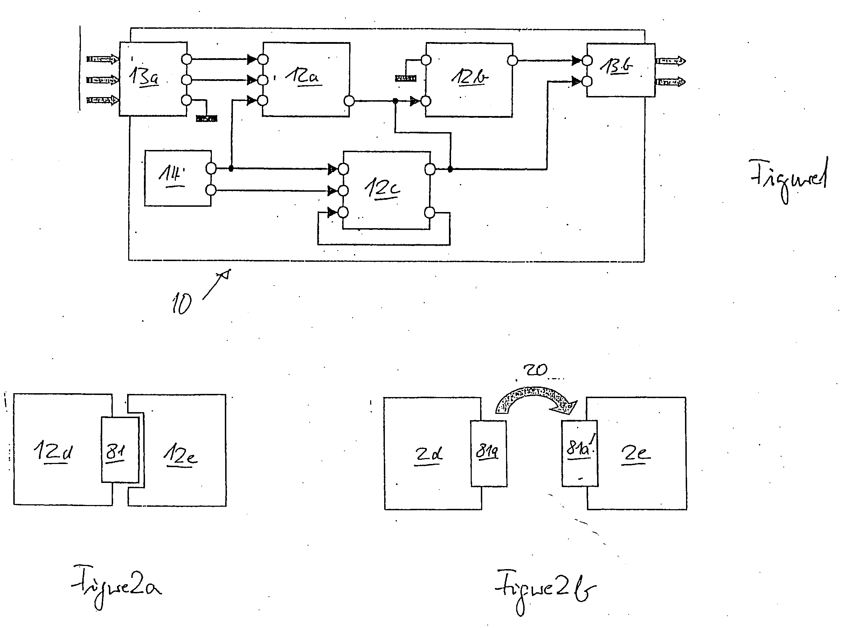

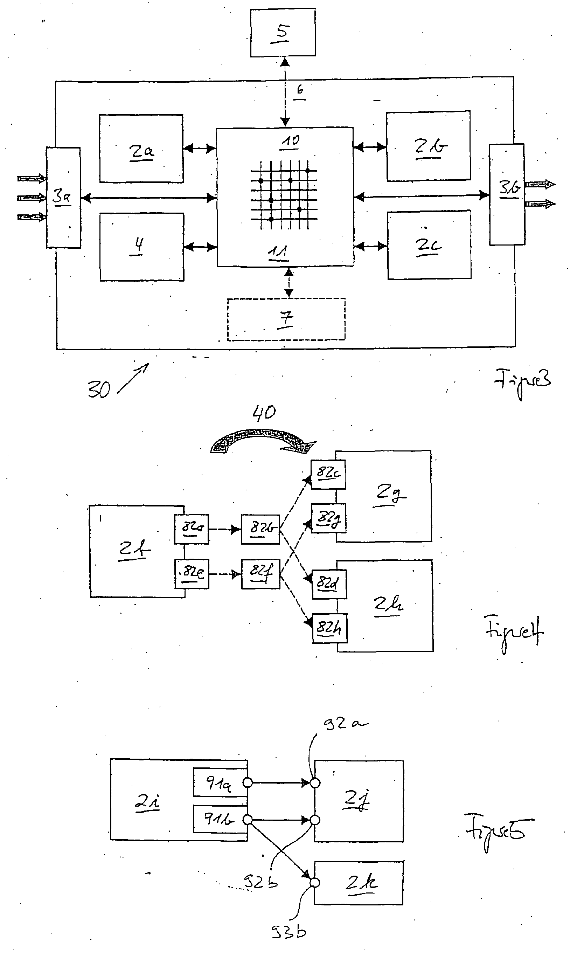

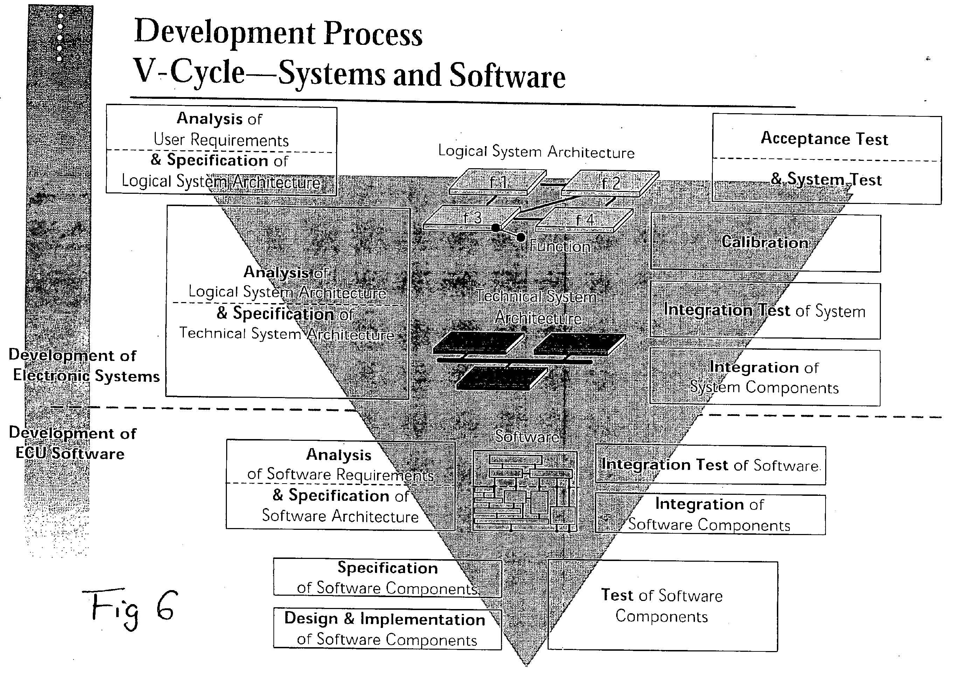

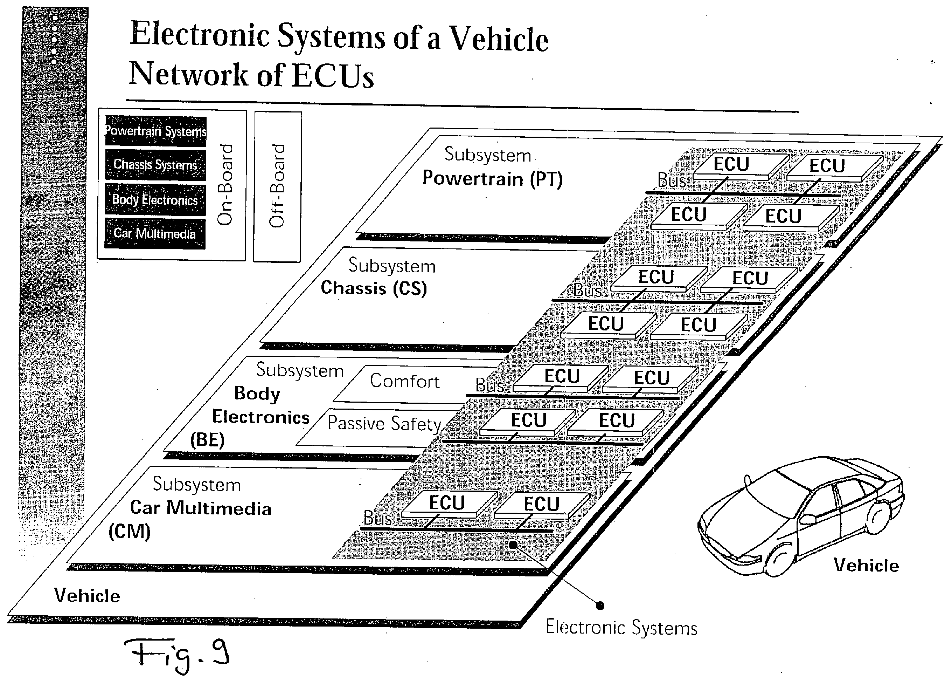

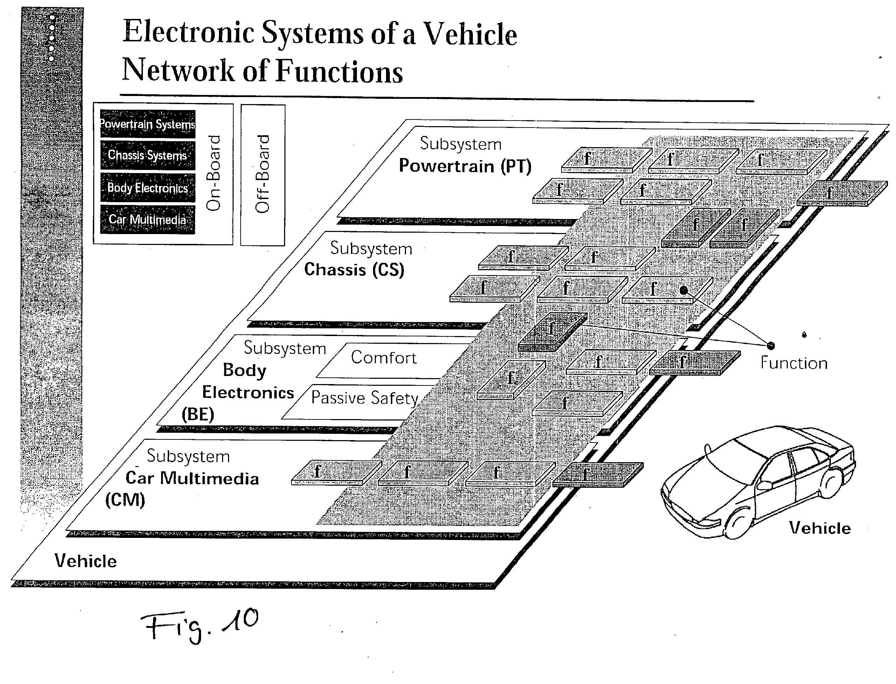

Figure 1 shows a conventional simulation system 10 at the model level as known from the prior art. Technically the known simulation system 10 comprises one or more simulation processors with corresponding memory modules on which portions 12a, 12b, 12c of a model of the control system under development (or so-called sub-models) are run. The simulation system 10 further comprises an input interface 13a and an output interface 13b for exchanging signals with the so-called outside world. Finally, the simulation system 10 comprises a communication interface for downloading the module from a host onto the simulation target, controlling the simulation experiment, measuring and calibrating module signals and parameters, respectively. Figure 1 is at the model level, not at the technical level. With 14 are stimuli signals named, used where no physical input signals are available. Separate fromthis is the communication interface later described with regard to figure 3. The inventive communication interface could be added into the figure 1 structure if desired.

Signals of the input and output interfaces can be analog (e.g., temperature or pressure sensor) or digital (e.g., communication protocol such as CAN). Within simulation experiments, the rapid prototyping system is used as integral part of the control loop, just the way finally the controller (electronic control unit) will be.

The preparation of a rapid prototyping experiment in general consists of the following steps:
1. creation of a mathematical model of the control system, for instance, by means of a behavioral modeling tool (such as MATLAB®/Simulink®¹ or ASCET-SD²) or by hand,
2. manual transformation (hand coding) or automated transformation (code generation) of the model into program code in some high-level programming language (C, for instance),
3. compilation and linkage of the program code into an executable,
4. download of the executable from the host onto the simulation target via the host-target communication interface, and
5. setup and invocation of the experiment from the host via the communication interface.

Frequently, several model parts (called modules in the following) from one or several sources (e.g., behavioral modeling tool, hand-written C code) are to be integrated with each other, so as to compose an entire control system's model. The communication among modules 12a, 12b, 12c as well as between modules and input or output interfaces 13a, 13b (likewise considered as modules in the following) is performed via signals connecting input and output ports, depicted as circles in Figure 1.

Conventionally, this communication is achieved by sharing the very same memory location (the same high-level language variable) for ports being connected with each other, where one module writes the current value of the signal into the given memory location and the other module reads from it.

In order to achieve this, the transformation of the model into executable code needs to be performed in a manner depending on the actual interconnection scheme, denoting that output port a of module A be connected with input port b of module B, for instance. In this example, both ports a and b would need to be statically mapped onto the very same memory location on the simulation target so as to enable inter-module communication.

With this conventional static interconnection approach, signals connect ports with each other in an inseparable manner. Whenever one or several connections between signals are to be established, modified or cut off, the entire process of model-to-code transformation, compilation and linkage, executable download, experiment setup and invocation needs to be performed. For real-world models, this process is very time consuming and may take up to several tens of minutes or even more. Especially when correcting a faulty connection being made inadvertently, current turn-around times are far too large. Further, as soon as the experiment has been downloaded and started, connections cannot be altered, added, or removed any longer.

The conventional approach to date is known to be employed by rapid prototyping systems such as those of ETAS GmbH (ASCET-SD product family), The Mathworks, Inc. (MATLAB®/Simulink®, Real-Time Workshop®, xPC Target) and presumably others.

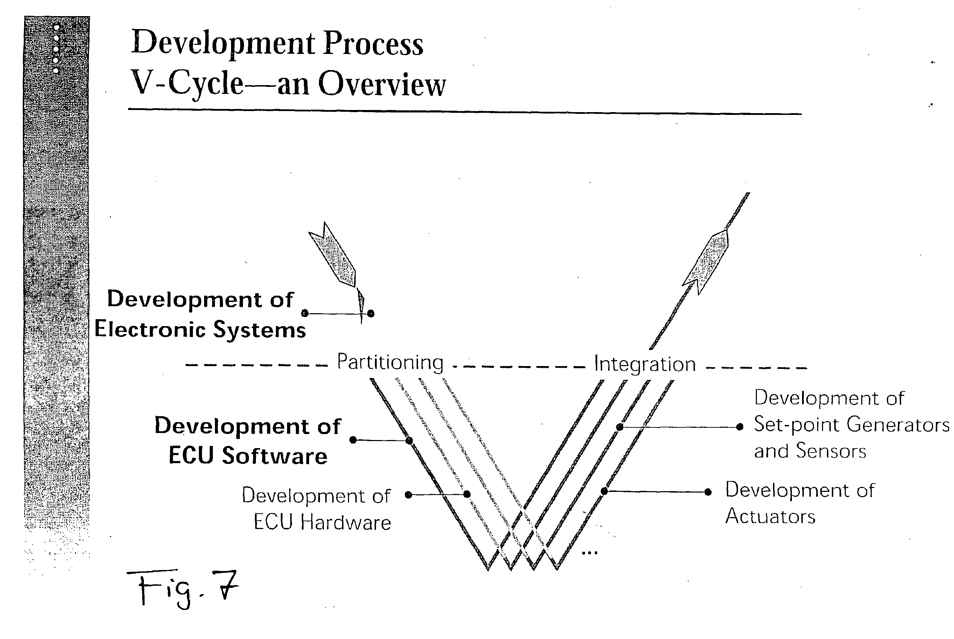

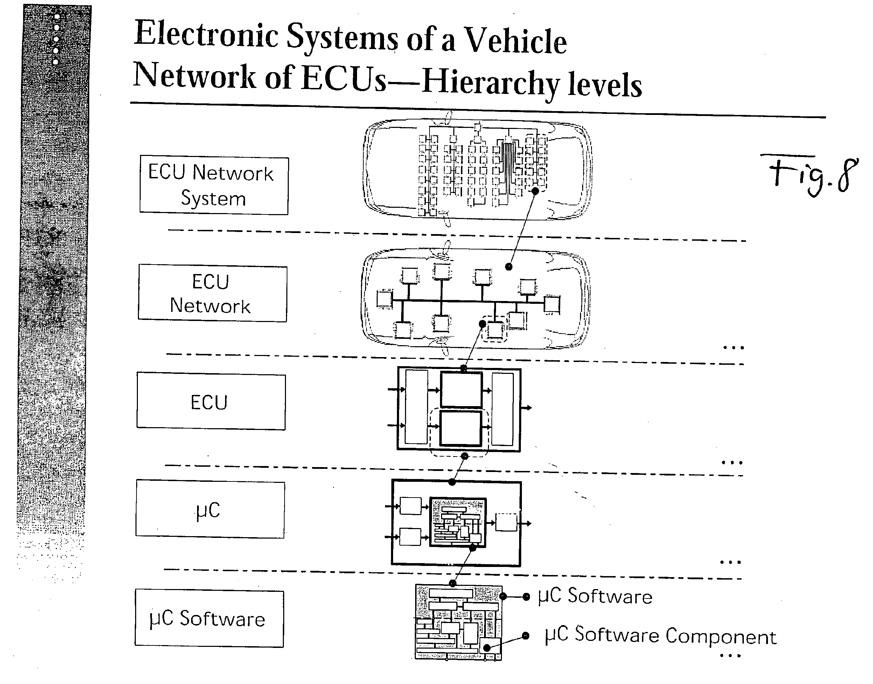

Such a static interconnection as known from the prior art is visualized in Figure 2a. Figure 2a shows a first module 12d and a second module 12e which are sharing a variable which is stored in a static memory location 81.

It is therefore an object of the invention to provide more flexible interconnection of hitherto static connections so that a simulation already being performed can be easily corrected, intercepted or modified. It is a further object of the present invention to improve communication between single components of a simulation systems as well as communication between single modules of a simulation model for providing a rapid prototyping of a control system of a vehicle.

These objects are achieved by proposing a simulation system with the features of claim 1 and a computer-implemented method for simulating and verifying a control system with the features of claim 11.

### Advantages of the invention

In contrast to the approach according to the prior art as described above, the dynamic interconnection approach of the present invention does not rely on interconnection scheme specific model-to-code transformation. Instead, this transformation is totally independent of the actual module interconnections being used. Rather, inter-module communication is performed in an explicit manner by using distinct memory locations instead of shared ones and copying or replicating signal values from one memory location to another when needed.

Since the interconnection scheme is not reflected by the mere simulation executable, it needs to be passed on to the simulation target differently. This is achieved by dynamically setting up the actual module interconnections via the host-target communication interface during experiment setup, after having downloaded the executable.

The exchange of signal values will be performed according to the respective interconnection scheme. No implicit naming conventions or the like as with the static memory sharing approach are required. Rather, the current value of a given signal is distributed from an output port to any connected input port by explicitly reading the value from the memory location associated with the output port and then replicating it to any memory location corresponding to a relevant input port.

The major advantages of this approach are:
- The turn-around times after altering the interconnection scheme are reduced significantly since the time consuming process of model-to-code transformation, compilation and linkage, and executable download needs not be repeated. This strongly supports the actual application of *rapid* prototyping.
- Signals connecting ports can be established, modified, or removed even during a running experiment without perceptible delay. This enables completely new possibilities of use such as the following:
   - correcting faulty connections on the fly, even without interrupting the experiment,
   - gradually setting up an experiment by putting portions of the entire model into operation little by little while continually establishing the final interconnection scheme,
   - spontaneously stimulating the model by establishing connections to its input ports,
   - switching an input port from a predefined stimulus module over to a real-world input signal,
   - comparing a number of implementation variants of the same module running in parallel by alternatively switching their outputs to the plant, or
   - swapping inputs or outputs to the rapid prototyping system virtually on the tool level, instead of first pulling out and again plugging in physical cable connections.

Therefore, according to the invention a simulation model is run to simulate and verify a control system during development, the simulation model comprises a number of sub-models which are run on the same or different nodes (processors) of a simulation system. Communication between the respective modules of the simulation model as well as the simulation system is performed via distinct and separate memory locations, the modules being dynamically connected with each other.

In a preferred embodiment of the invention, the data and/or signals are replicated consistently by means of a cross-bar switch. Preferably, this replication is performed under real time conditions.

In a further embodiment of the invention, the modules interconnect automatically via interconnection nodes and replicate data.

A consistent replication of data under real-time circumstances or conditions may be done via communication variables. The cross-bar switch as mentioned above provides means for consistently copying values of output signals to communication variables after reaching a consistent state.

Further, the cross-bar switch provides means for consistently passing these values to connected input signals before the respective modules continue computation. Depending on the respective real time architecture of the simulation system and/or the set-up of the real-time operating system a consistent copy mechanism may be achieved by atomic copy processes, blocking interrupts or the like. Under certain circumstances being determined by the respective real-time environment settings, signal variables or communication variables may be obsolete and then could be optimised away for higher performance.

According to an alternative embodiment of the invention, a distributed approach could be used for dynamic reconfiguration of module interconnections instead of the central approach as described above. In this alternative embodiment, ports could connect themselves to their respective counterparts and be responsible for signal value replication.

The invention also covers a computer program with program coding means which are suitable for carrying out a process according to the invention as subscribed above when the computer program is run on a computer. The computer program itself as well as stored on a computer-readable medium is claimed.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the drawings

In the drawings,
- Figure 1: is a schematic block illustration of a simulation system at the model level of the prior art as well as of the invention;
- Figure 2a: is a schematic illustration of a static interconnection of the prior art;
- Figure 2b: is a preferred embodiment of a dynamic interconnection according to the present invention;
- Figure 3: is a preferred embodiment of a simulation system according to the invention using a dynamic interconnection according to Figure 2b;
- Figure 4: is an example of a consistent replication under real-time circumstances via communication variables according to the invention; and
- Figure 5: is an alternative embodiment of an interconnection scheme according to the invention.

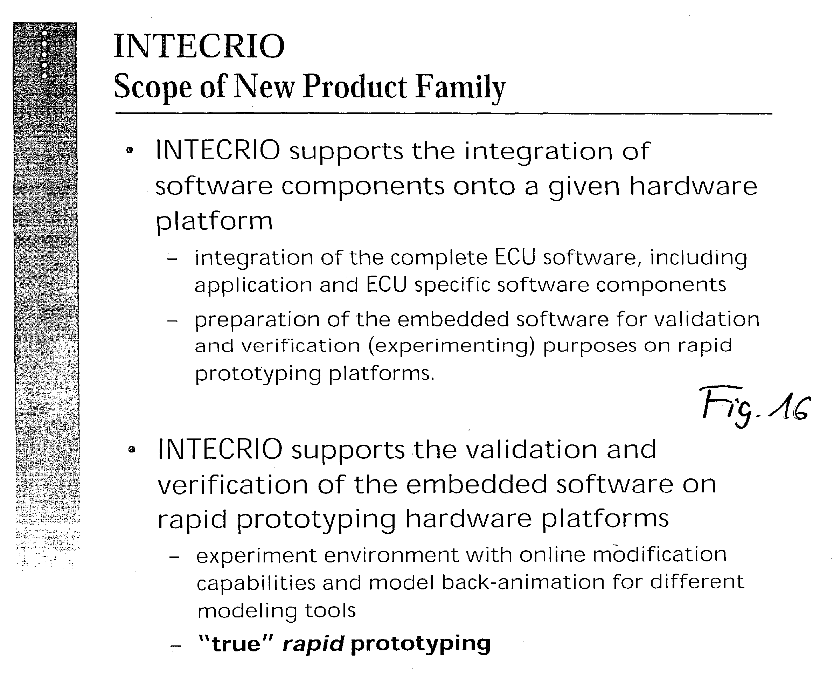

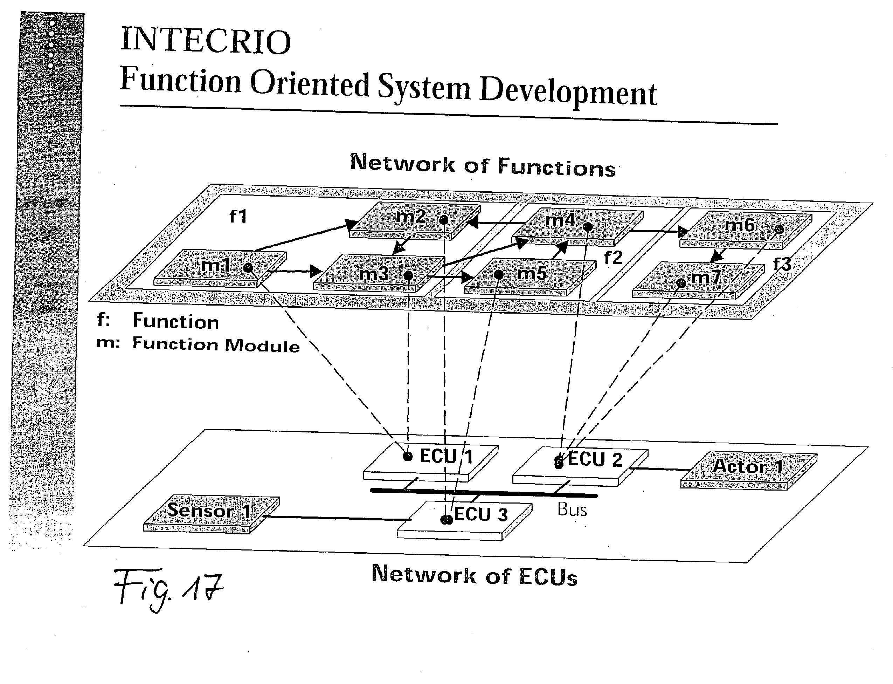

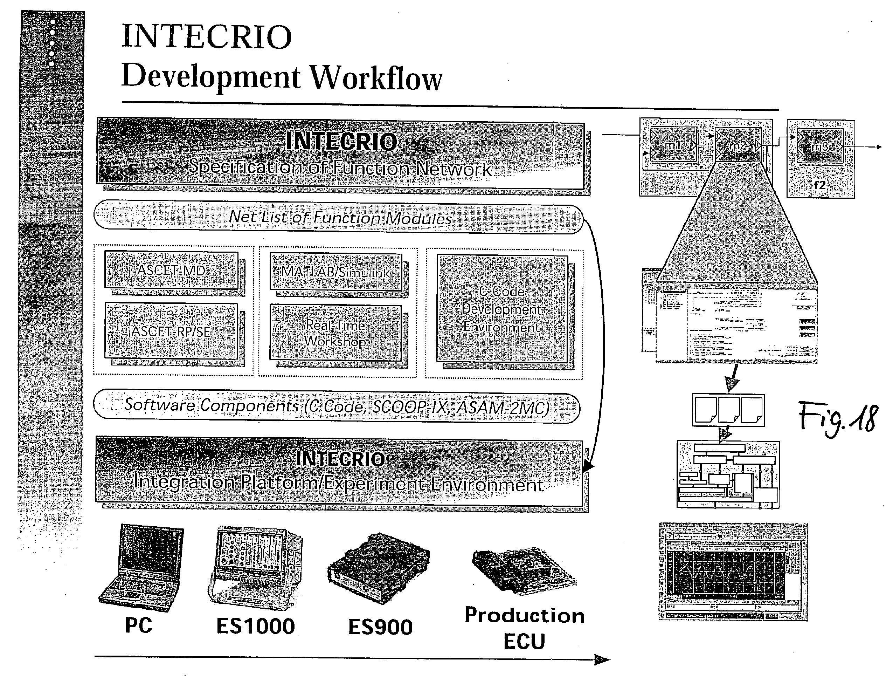

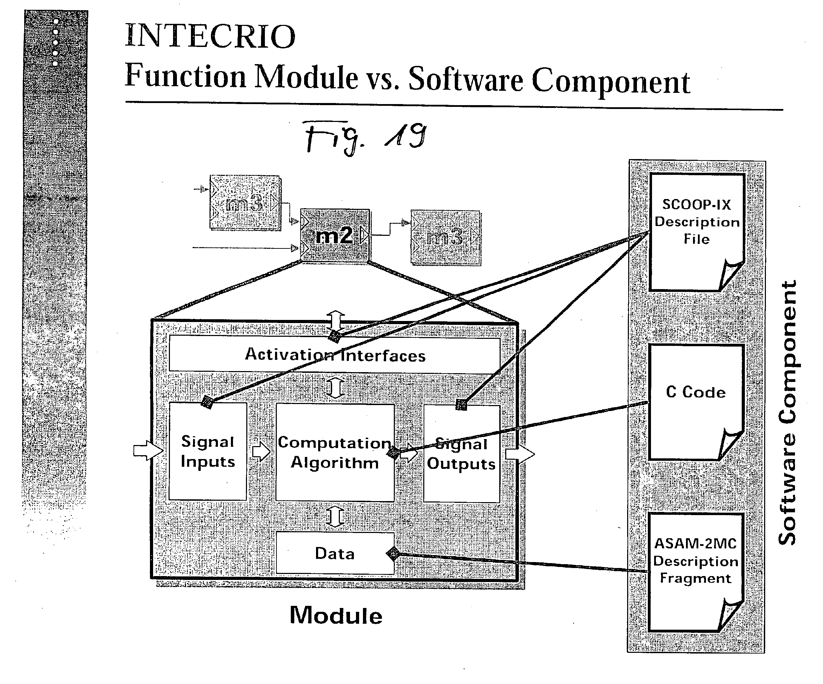

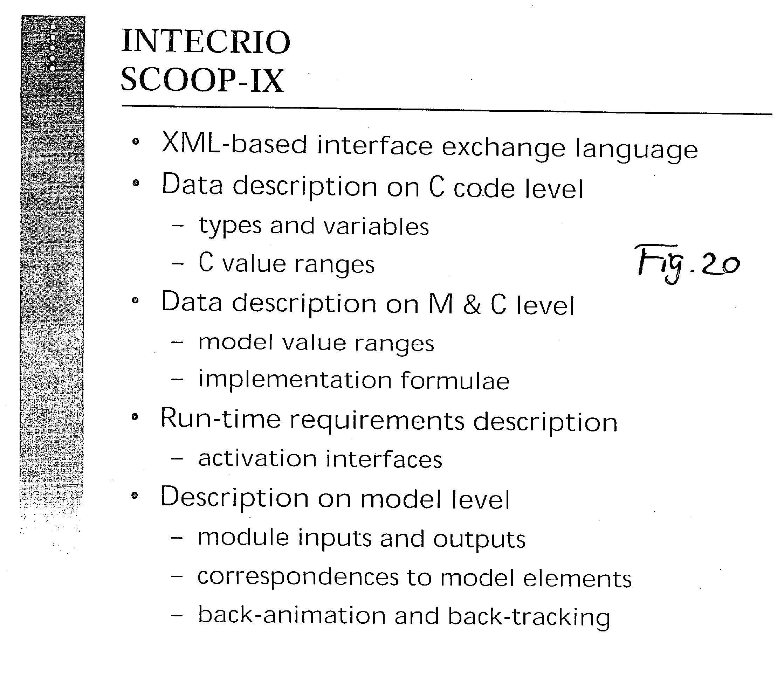

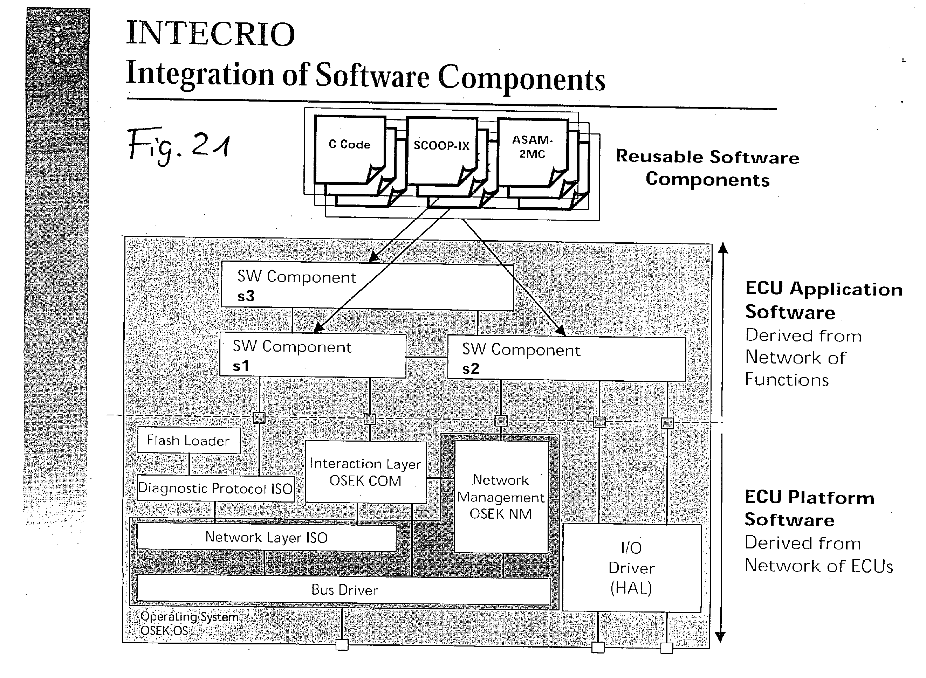

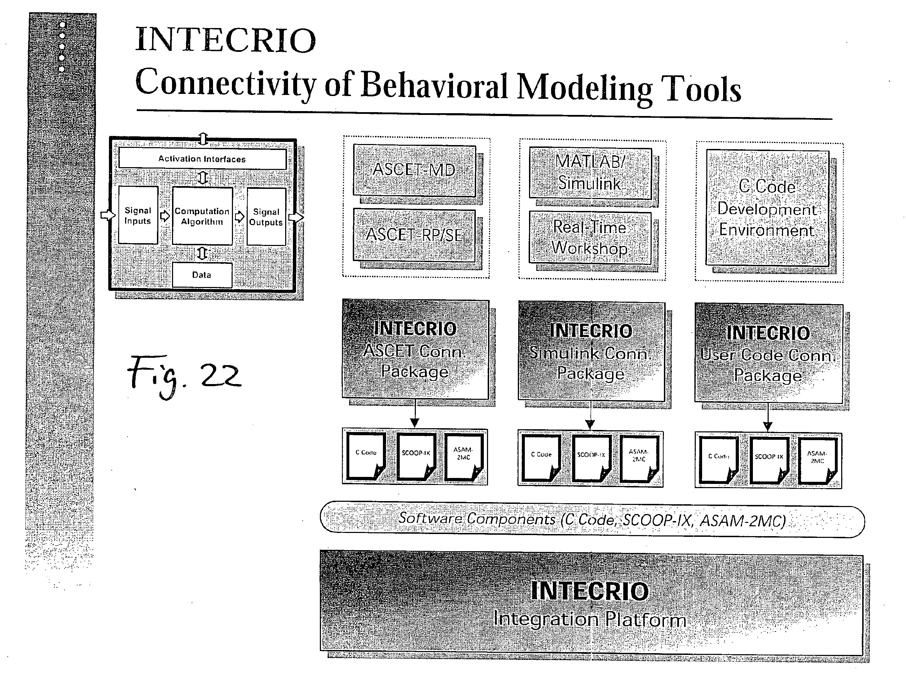

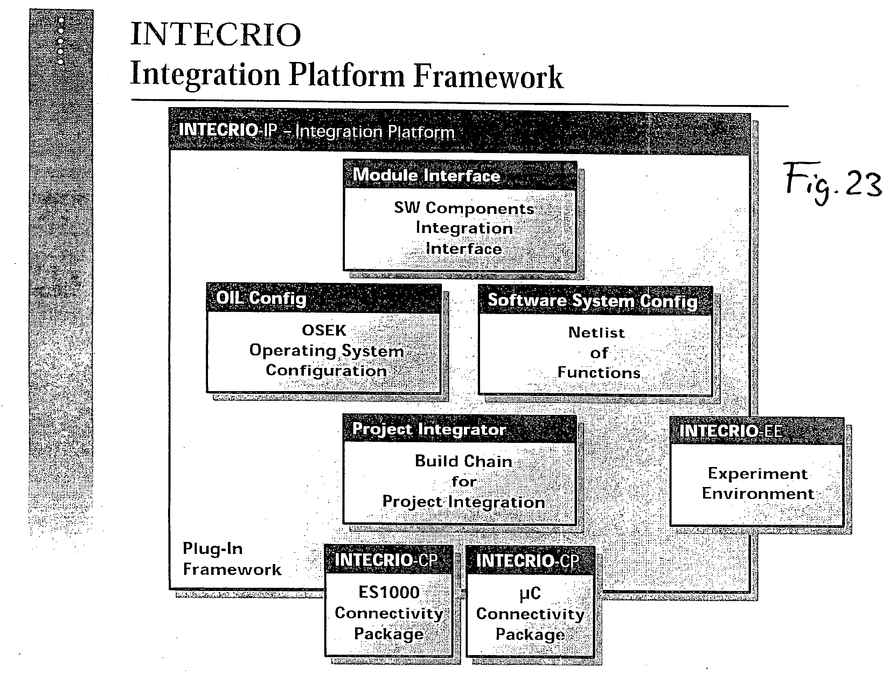

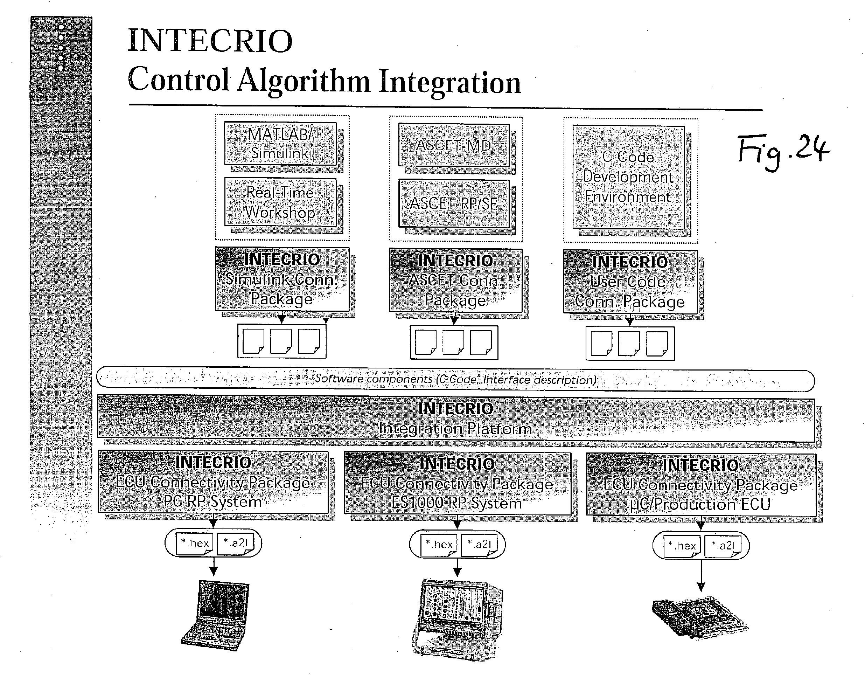

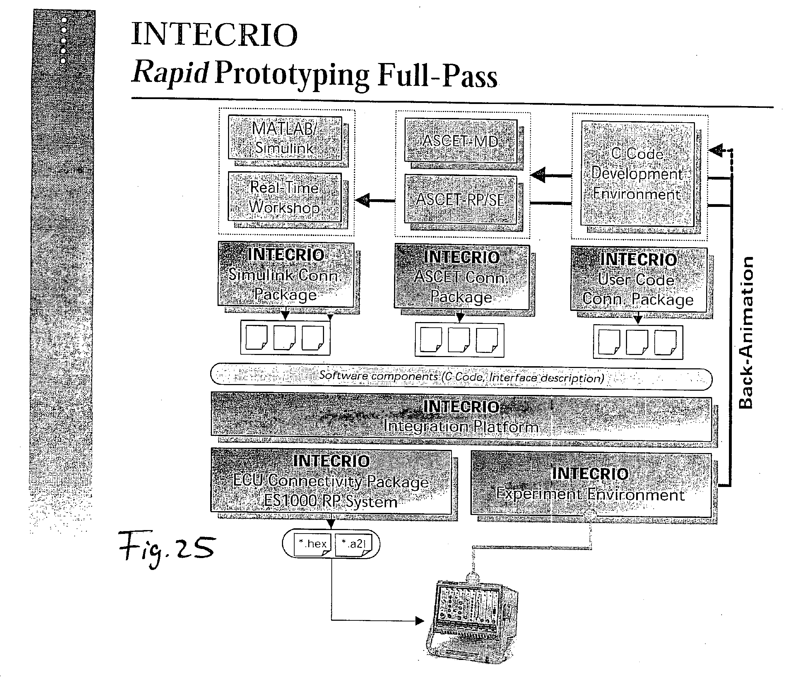

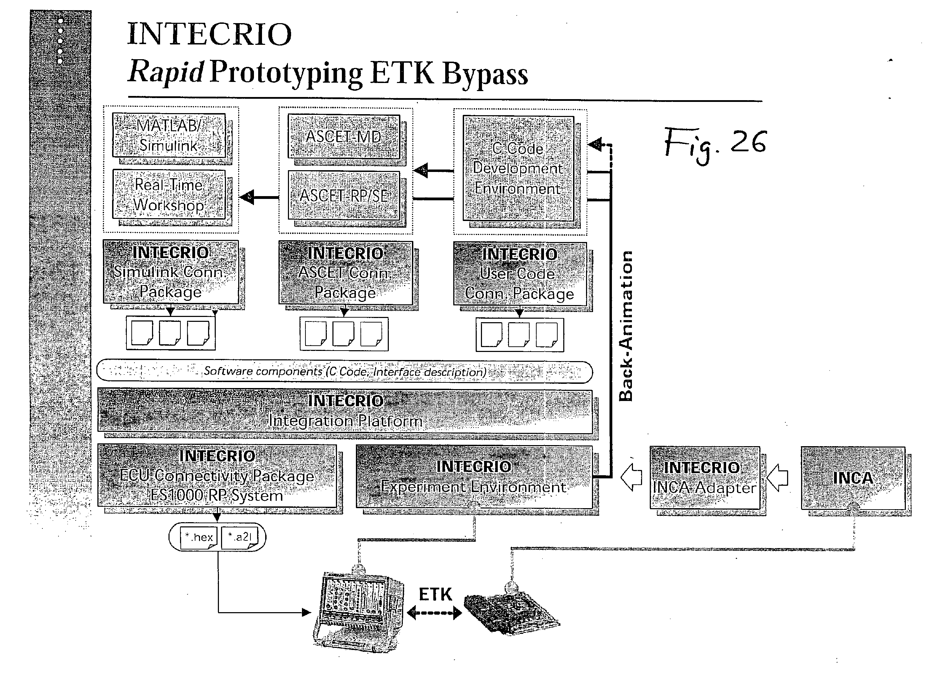

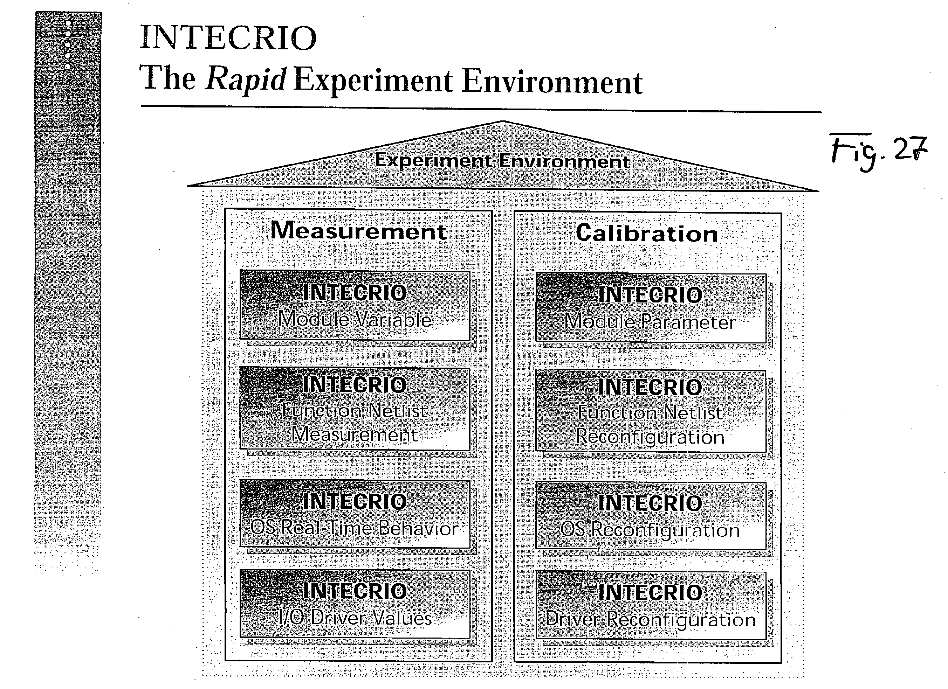

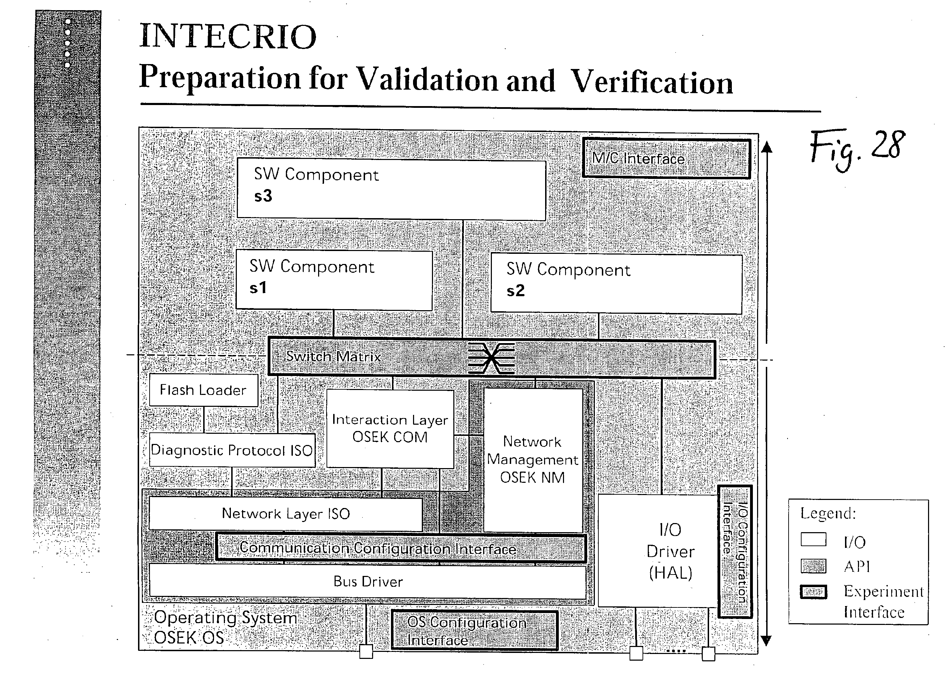

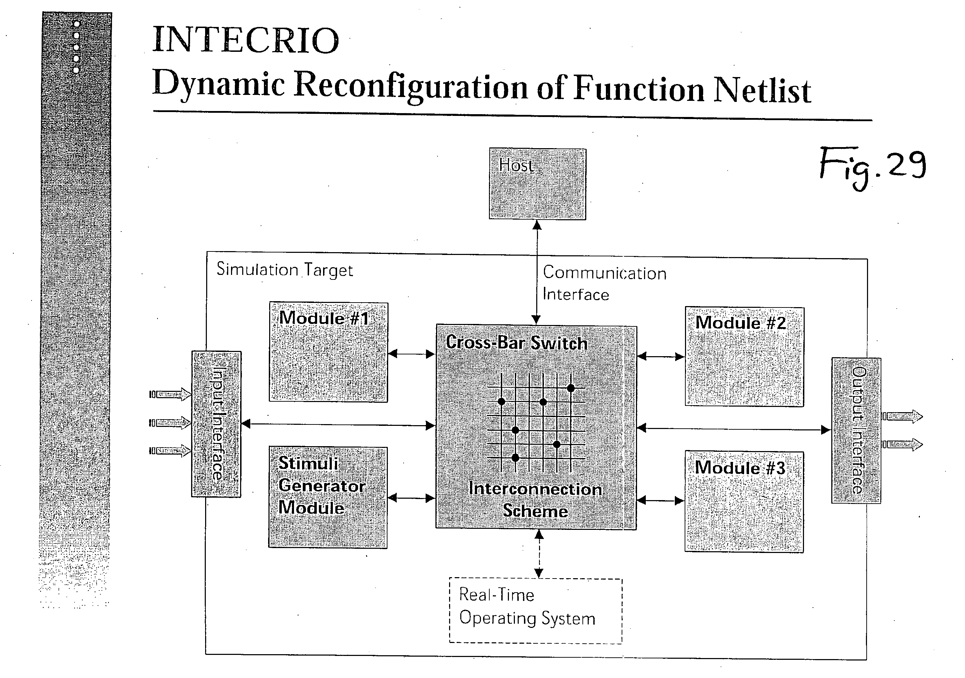

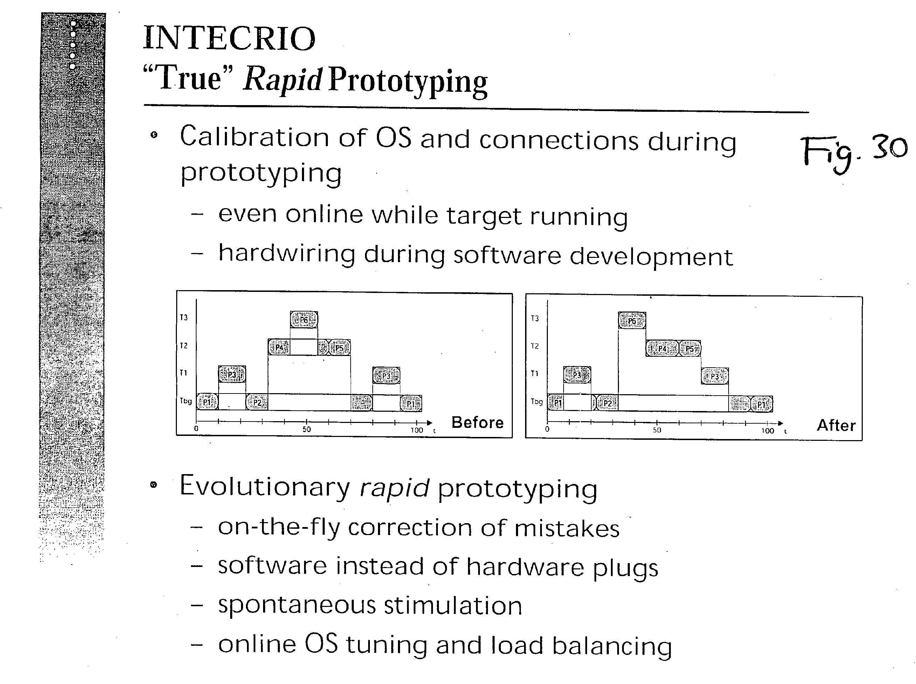

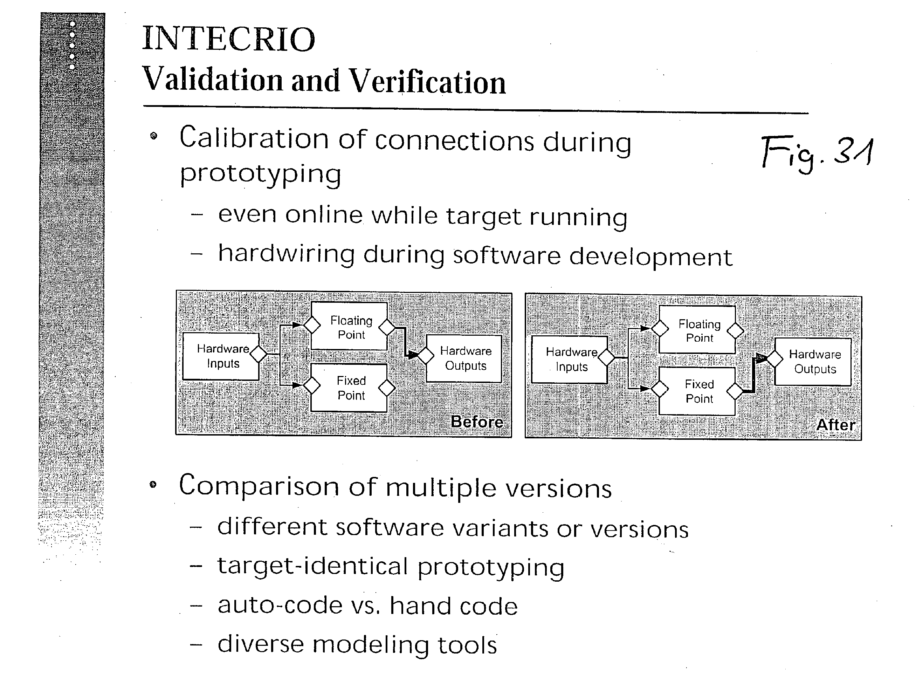

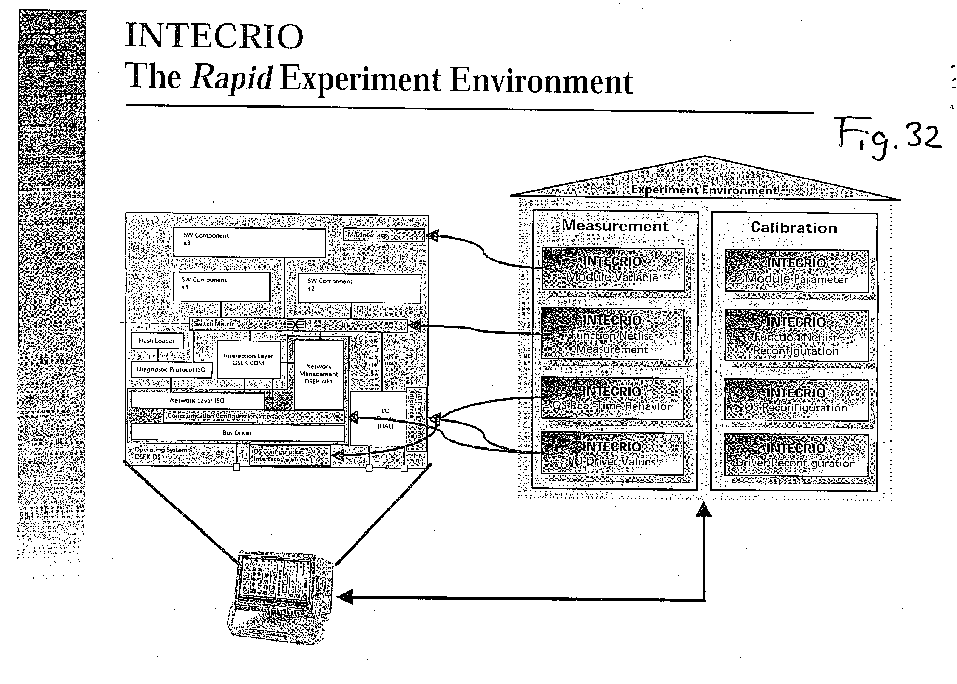

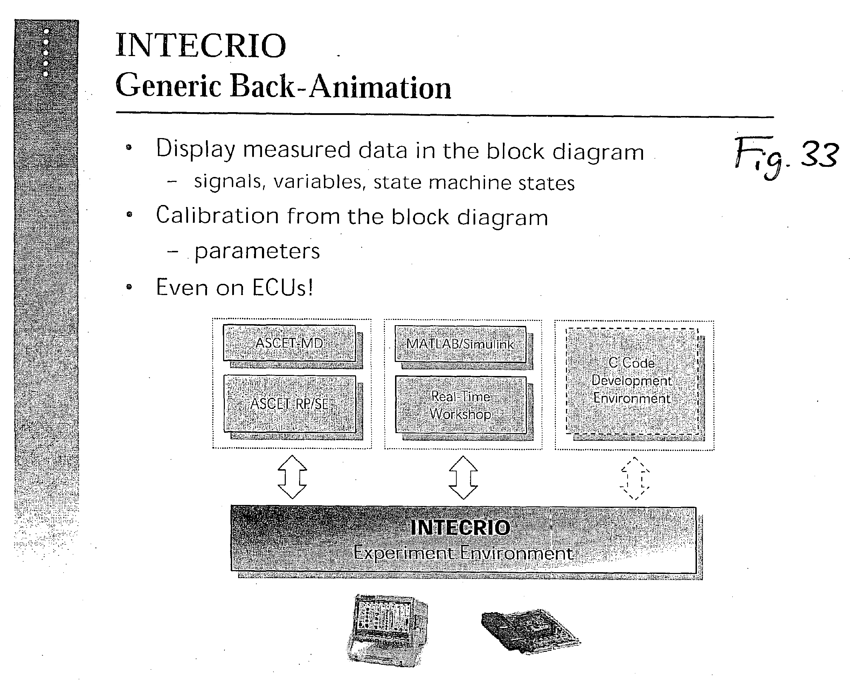

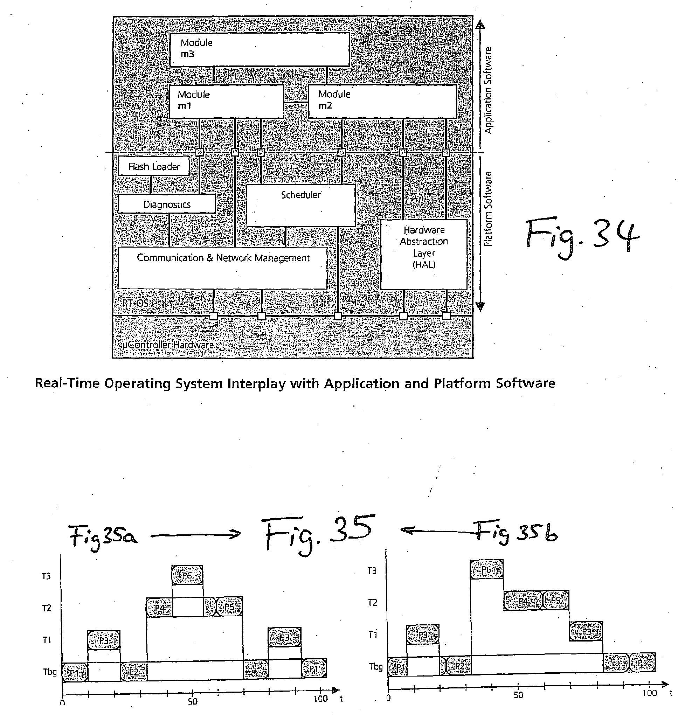

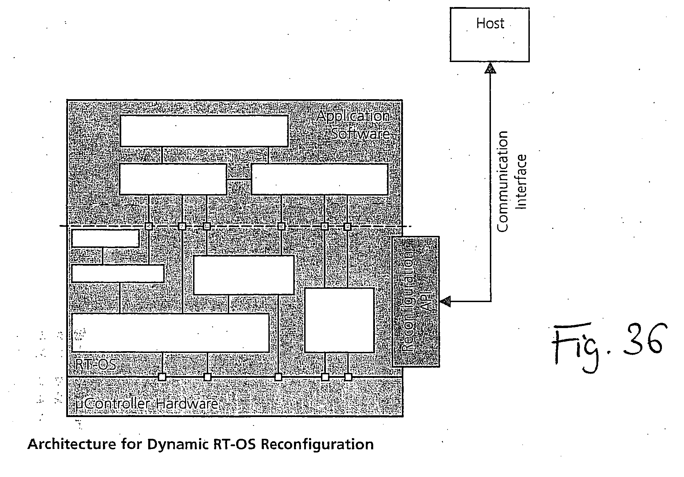

The other Figures 6 to 33 and also Fig.34, Fig.35 (consisting of Fig.35a and Fig.35b) and Fig. 36, with the respective description show embodiments of the invention.

### Embodiments

According to the invention and in contrast to the static connection known from the prior art as described above with reference to Figure 2a, a dynamic interconnection approach via distinct memory locations is provided. The principles of the dynamic interconnection according to the invention is visualized in Figure 2b wherein data 81a of a first module 2d are copied or replicated by means of dynamic replication 20 in a distinct memory location of a second module 2e as according data 81a'.

Several architectures underlying the dynamic reconfiguration approach may be conceived. With reference to Figure 3, a first example for a simulation system 30 according to the invention is described in the following as the so-called central approach.

The main component of the central approach simulation system 30 is a so-called cross-bar switch 10 with an interconnection scheme 11. The simulation system 30 further comprises a plurality of modules 2a, 2b, 2c, an input interface 3a, an output interface 3b, a stimuli generator module 4 as well as a real-time operating system 7.

As visualized by the double headed arrows in Figure 3, all components of simulation system 30 are interconnected with each other via the cross-bar switch, the interconnection scheme 11 defining which input and output ports of modules on the simulation target are connected with each other. The interconnection scheme corresponds to the totality of connections in a block diagram wherein each block corresponds to one of the modules being integrated on the simulation target 30.

The interconnection scheme 11 could be conceived as a two-dimensional switch matrix wherein both dimensions denote the modules' ports and the matrix values define whether the respective ports are connected with each other (and possibly the signal flow direction).

A simulation host 5 is connected with the cross-bar switch 10 via a host-target communication interface 6 and constitutes the human-machine interface to the rapid prototyping system.

The host 5 enables the configuration and reconfiguration of the interconnection scheme, preferably supported by some graphical user interface.

The host-target communication interface 6 connects the simulation host 5 with the simulation target 30. In general, it is based on some wired or wireless connection (serial interface, Ethernet, Bluetooth, etc.) and standardized or proprietary communication protocols (e.g., ASAP1b, L1). It provides at least the following functionality:
- download of the simulation executable from the host 5 to the simulation target 30 and
- download of configuration data defining the interconnection scheme 11.

Further, it may provide functionality for
- controlling the experiment, e.g. for starting and stopping the simulation,
- measuring values of model signals, interconnection signals, and input or output signals,
- calibrating model parameters, etc.

The cross-bar switch 10 runs on the simulation target and is connected with
- the simulation host 5 via the host-target communication interface 6,
- modules 2a, 2b, 2c representing model portions or sub-models of the control system under development,
- modules 3a, 3b representing input and output interfaces to the control system's plant,
- modules 4 serving as stimuli generators to the model, and
- preferably a real-time operating system 7 underlying the simulation experiment.

Before starting a simulation experiment, the initial interconnection scheme 11 is downloaded from the host 5 via the host-target communication interface 6 into the cross-bar switch 10.

During a running experiment, the cross-bar switch 10 performs the actual communication among modules and components by copying signal values from output ports to input ports. The way this replication process is performed is defined by the interconnection scheme 11.

The interconnection scheme 11 can be reconfigured after interrupting or even during a running simulation. Thus, module interconnections can be altered on the fly, without perceptible delay.

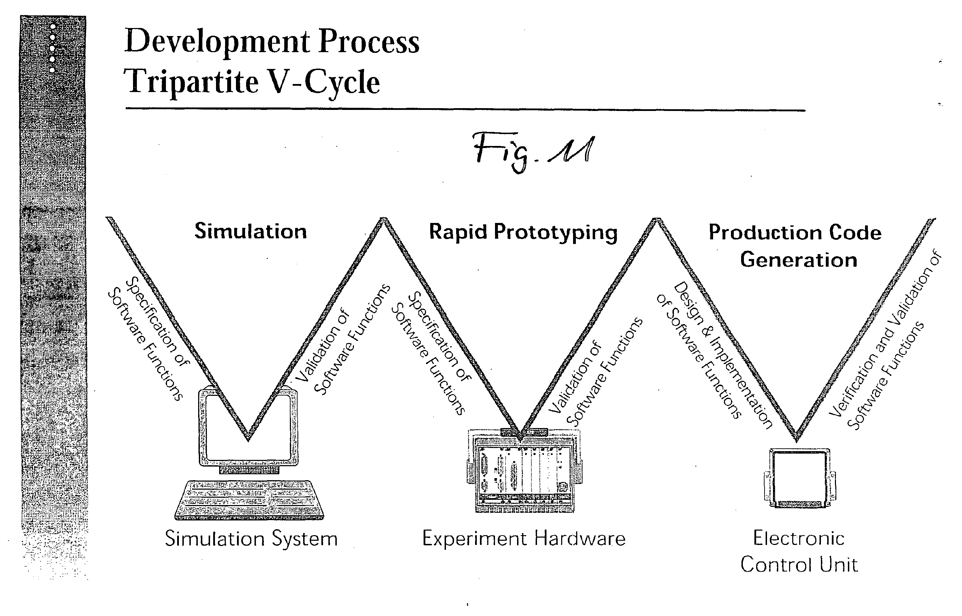

Referring now to Figure 4, a preferred alternative of a transmission of signals and/or data according to the invention is illustrated. By means of dynamic replication 40, signal and/or data values 82a, 82e of a first module 2f can be buffered as communication variables 82b, 82f, respectively, in distinct memory locations. By means of further dynamic replication 40, second and third modules 2g, 2h receive respective signal and/or data values 82c, 82g and 82d, 82h, respectively.

Thus, data consistency within a real-time environment is ensured. Each module 2f, 2g, 2h may compute at e.g. a different rate or upon interrupt triggers, and data replication 40 is performed by means of communication variables 82b, 82f buffering the current signal values. Thus, the values of several output signals which as a whole constitute a valid state are guaranteed to be copied in a consistent manner such that modules being fed by these output signals may themselves rely on a valid state.

As already mentioned above, the cross-bar switch 10 provides means for
- consistently copying values of output signals to communication variables after reaching a consistent state and
- consistently passing these values to connected input signals before the respective modules continue computation.

The consistent copy mechanism as described may be achieved by atomic copy processes, blocking interrupts or the like, depending on the underlying real-time architecture and operating system.

Under certain circumstances being determined by the respective real-time environment settings, signal variables or communication variables may be obsolete and then could be optimized away for higher performance.

The above-described dynamic reconfiguration approach could be extended by signal conditioning facilities. In order to achieve this, each signal value may be influenced during inter-module communication in a pre-defined manner after reading the original value from the source memory location and before writing to the target memory location.

Possible signal conditioning operations are:
- implementation formula adaptation (e.g., scale or offset modification, saturation) or
- basic mathematical operations (e.g., sum, difference, multiplication of signals, mapping via look-up table or characteristic with interpolation, constant value).

The kind of operation being applied and the respective parameters are considered as being part of the interconnection scheme. Each of them can be configured and reconfigured in a dynamic manner, as can module interconnections. This enhancement greatly widens the usefulness of the dynamic reconfiguration approach.

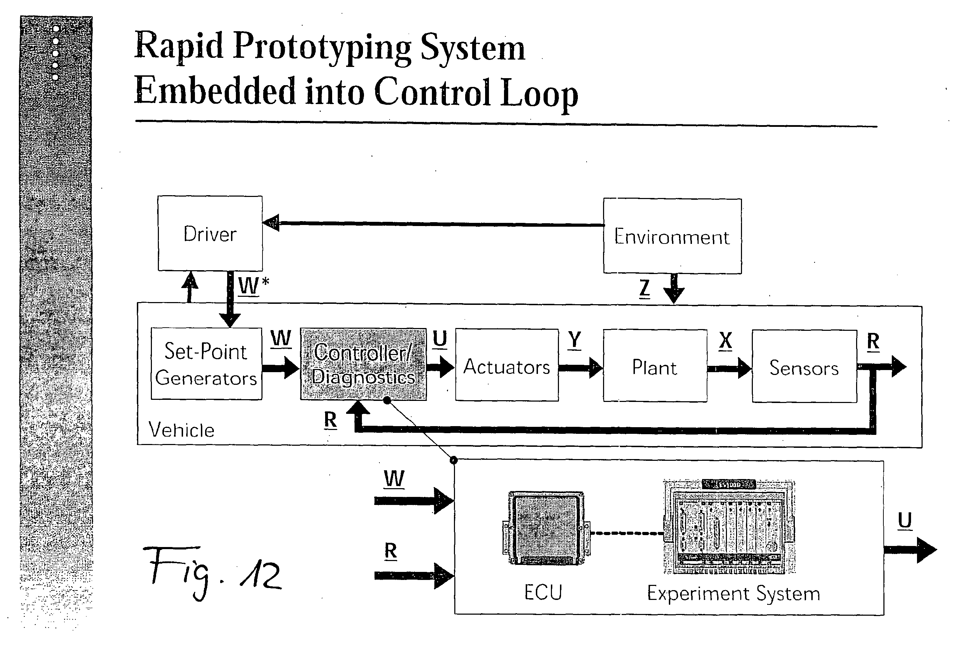

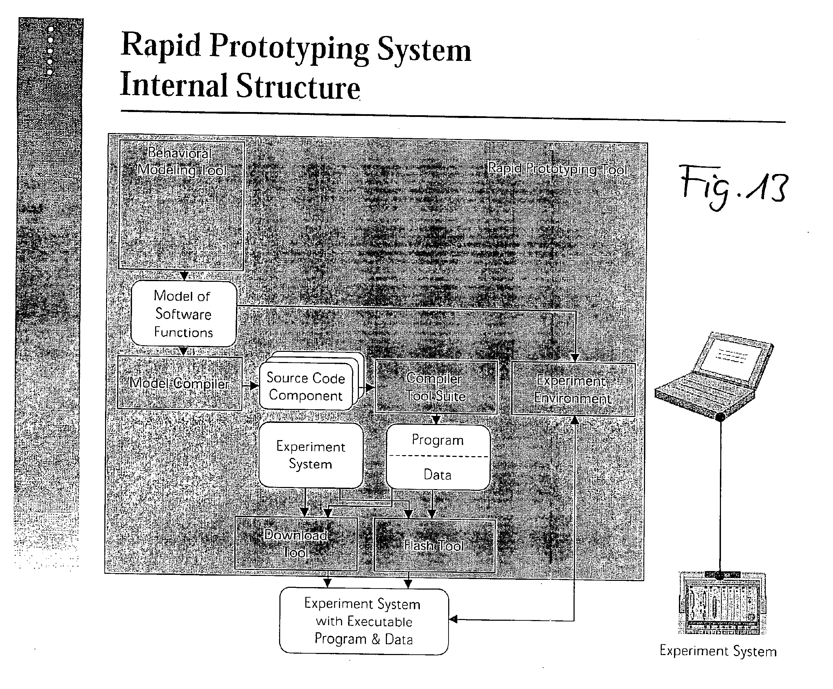

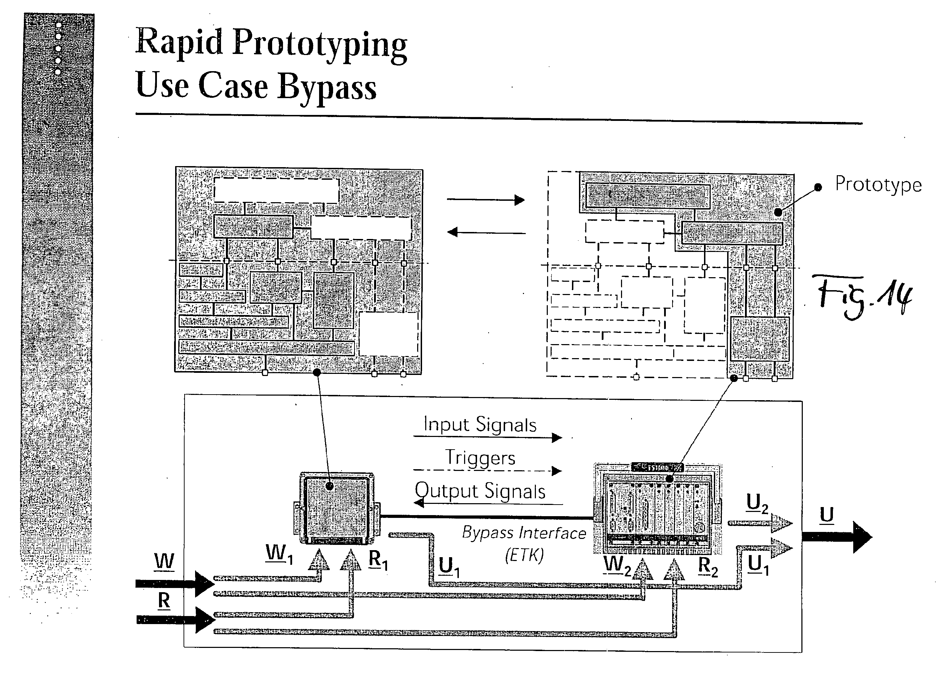

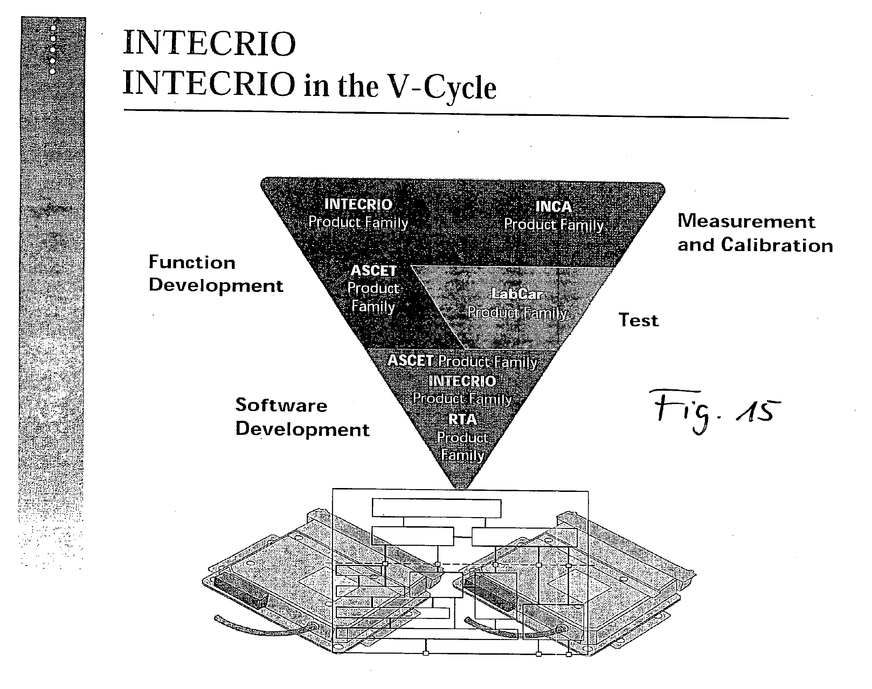

Referring now to Figure 5, a distributed approach for dynamic reconfiguration of module interconnections which could be used instead of the central approach employing a distinct cross-bar switch component on the target is described. Rather than having a central component copy signal values, ports could "connect themselves" to their respective counterparts and be responsible for signal value replication.

For instance, this could be achieved by having input ports 92a, 92b and 93b of modules 2j and 2k register themselves at output port servers 91a, 91b of module 2i upon connection, each of which represents a given output port. Communication could be performed either following a pull approach (input port queries signal value) or a push approach (multi-cast of signal value, invoked by output port). Thus, the intelligence for value replication is distributed over the system's components instead of concentrating it in a central cross-bar switch component.

### Dynamic Reconfiguration of Real-Time Operating Systems on Rapid Prototyping Systems Karsten Strehl (ETAS/PAC-F1)

### 1 The State of the Art

Rapid prototyping of control systems is commonly used in the automotive industry, aviation, etc., for early verification of the correct functional and real-time behavior of a control system under development. Like this, control strategies.and algorithms for dynamic systems such as vehicles or parts of them can be tested under real-world conditions without requiring the existence of the final implementation of the control loop.

A rapid prototyping system usually is characterized as being a hybrid hardware/software system, in general consisting of the following main components:
- a simulation target, consisting of one or several simulation processors with corresponding memory modules, each runníng basically a portion of a model or of the program code of the control system under development,
- input interfaces composed of signals being fed by the plant (the outside world being controlled),
- output interfaces composed of signals feeding the plant, and
- communication interfaces for downloading the control program from a host (often a personal computer) onto the simulation target, controlling the simulation experiment (start and stop commands; etc.), measuring and calibrating signals and parameters, respectively.
Signals of the input and output interfaces can be analog (e.g., temperature or pressure sensor) or digital (e.g., communication protocol such as CAN). Within simulation experiments, the rapid prototyping system is used as integral part of the control loop, just the way finally the controller (electronic control unit) will be.

The control system's code on the simulation target usually runs on top of a real-time operating system (RT-OS¹), providing and controlling the real-time behavior of the application. For this, in cooperation with the rest of the platform software the RT-OS in general performs tasks such as scheduling, resource management, I/O management, or communication and network management. In the automotive industry, mainly OSEK/VDX²compliant operating systems such as ERCOS^{EK 3} are employed.
¹ OS : operating system
² OSEK/VDX: an automotive standard for real time OS
³ ERCOS : is a product by ETAS GmbH

The application usually is divided into a number of tasks (as with OSEK/VDX), threads, or processes, each of. which may have a priority, scheduling mode, execution period and offset, interrupt source, completion deadline, etc., associated. According to these data, the RT-OS' scheduler dispatches, invokes, and controls the tasks, in order to provide the desired real-time behavior.

Many operating systems used for embedded control, particularly OSEK/VDX compliant ones, are being configured statically. This means that the configuration of the OS takes place by means of C code being generated by some OS configurator utility. This OS configurator transforms some given OS specification (e.g., an·OIL⁴ description in the case of OSEK/VDX) into C code representing OS internal data structures and functionality, for instance, task containers and task tables containing function pointers being called by the scheduler, interrupt masks and handlers, priority schemes and task FIFO⁵ queues, timers, or stacks.
⁴ OIL: OSEK/VDX implementation language
⁵ FIFO: first in, first out

Unlike dynamically configurable operating systems, statically configurable OS in general require all configuration to be done by static memory allocation and initialization at compile time, for better run-time performance in terms of computation speed and memory consumption. On the other hand, no modifications of the static OS configuration can take place during run time, in contrast with dynamically configurable operating systems. Nevertheless, even dynamically configurable OS usually are just configured once at system start-up by the application itself rather than being reconfigured during run time. In this regular case, the OS configuration is done by either hand coding or code generation from an OS specification.

The preparation of a rapid prototyping experiment in general consists of the following steps:
1. manual implementation (hand coding) or automatic code generation (from some mathematical model) of the control system's program code in some high-level programming language (C, for instance),
2. creation of the OS specification, manually or supported by some textual or graphical utility,
3. configuration of the real-time operating system by means of code generation,
4. compilation and linkage of the program code together with the RT-OS and its configuration into an executable,
5. download of the executable from the host onto the simulation target via the host-target communication interface, and
6. setup and invocation of the experiment from the host via the communication interface.
As mentioned above, with this conventional OS configuration approach, once the executable has been created the real-time behavior cannot be altered any longer. The program code and the RT-OS are associated with each other in an inseparable manner. Whenever one or more real-time properties of the control system are to be modified, the entire process of OS specification, configuration via code generation, compilation and linkage, executable download, experiment setup and invocation needs to be performed. For real-world control systems, this process is very time consuming and may take up to several tens of minutes or even more. Especially when correcting a faulty OS setting being made inadvertently, current turn-around times are far too large. Further, as soon as the experiment has been downloaded and started, the real-time behavior cannot be altered any longer.
   The conventional approach to date is known to be employed by rapid prototyping systems such as those of ETAS GmbH (ASCET product family), The Mathworks, Inc. (MATLAB®/Simulink®, Real-Time Workshop®, xPC Target) and presumably others (possibly dSpace GmbH).

### 2 The Basic Concepts

In contrast with the above-described approach, the dynamic reconfiguration approach being the subject of this invention does not rely on OS configuration by means of code generation or hand coding. Instead, the configuration and integration process is totally independent of the actual OS specification being used. Rather, the association between RT-OS and. application is made by configuring the OS after download and assembling it with the application right before or even at run time. Note that this approach addresses both statically as well as dynamically configurable RT-OS.
Since the OS specification is not reflected by the mere simulation executable, it needs to be passed on to the simulation target differently. This is achieved by dynamically and externally setting up the actual OS configuration via the host-target communication interface during experiment setup, after having downloaded the executable. Depending on the capabilities of the underlying OS, the dynamic OS reconfiguration can even take place during run time of the experiment.
For dynamically configurable operating systems, this is done via the existing OS API. Presumably no modifications are required. Statically configurable operating systems in general need to be extended with an OS reconfiguration API, accessible at least during OS initialization or OS start-up and after its shutdown. This probably implies the allocation and initialization of OS internal data structures to be turned from static into dynamic.
In the following, for simplicity the ERCOS^{EK} operating system is used in an exemplary fashion (without implying restrictions on the applicability of this invention to different RT-OS). ERCOS^{EK} supports tasks containing processes (void/void C functions) as scheduler entities and cooperative as well as preemptive scheduling at the same time.

### Task Scheduling Gantt Chart before and after RT-OS Reconfiguration

Particularly real-time properties in form of the following OS objects are supposed to become subject to dynamic reconfiguration (enumeration considered incomplete):
- kind of task (periodic, ISR, invoked by software or upon application mode initialization),
- task priority and scheduling mode (cooperative, preemptive, or non-preemptable),
- task period and offset,
- task deadline and maximum number of activations,
- content of task: processes within a task and their order,
- application modes of the OS,
- resources, alarms, and counters,
- I/O configuration (drivers, hardware abstraction layer, etc.) as well as network management,
- events and messages for communication, as well as
- the associations thereof.

The major advantages of this approach are:
- The turn-around times after altering the OS specification are reduced significantly since the time consuming process of OS configuration via code generation, compilation and linkage, and executable download needs not be repeated. This strongly supports the actual application of *rapid* prototyping.
- OS objects such as tasks, processes, application modes, alarms, events, or messages can be established, modified, or removed even during a running experiment, without perceptible delay. This enables completely new use cases such as the following (best supported by some OS monitoring utility measuring processor load, task jitters, gross and net run times, deadline violations, etc., or even displaying graphical tracing information, e.g., in form of Gantt charts):
   - correcting faulty settings on the fly, even without interrupting the experiment,
   - gradually setting up an experiment by putting portions of the entire control system into operation little by little while continually establishing the final real-time behavior,
   - iteratively tuning task periods, offsets, and deadlines according to the control system's needs,
   - leveling the processor load by shifting tasks into idle phases,
   - identifying permissible value ranges for stable and functionally correct behavior by "trial and error" reconfiguration,
   - load balancing in case of compute intensive applications by switching currently dispensable functionality "off",
   - spontaneously triggering parts of the control system by creating and activating tasks on the fly,
   - deactivating parts of the control system by masking or suppressing the corresponding tasks or processes,
   - switching a process from internal invocation over to a real-world input interrupt such as a crankshaft synchronous signal and back, or
   - comparing a number of implementation variants of the same module running in parallel by alternatively enabling and disabling their corresponding control system parts.

### Detailed Description

### The Architecture

Several architectures underlying the dynamic reconfiguration approach may be conceived of. As an example, the approach based on a statically configurable, OSEK/VDX compliant real-time operating system is described in the following. Its main component is the RT-OS running on the simulation target, being complemented with a reconfiguration API.

### The Function

### The Real-Time Operating System

The real-time operating system manages the resources of the simulation target and performs the real-time scheduling of the application. Its configuration can be altered after downloading the control system's executable to the simulation target. Hence, internal OS data structures are supposed to be dynamically allocated and initialized, in order to extend or modify them during run time. The actual implementation of the data structures heavily depends on the respective RT-OS. The RT-OS is connected with
- the simulation target's hardware by means of hardware services and resources,
- the application software constituting the control system's program code composed of a number of modules, and
- the reconfiguration API.

### The Simulation Host

The simulation host constitutes the human-machine interface to the rapid prototyping system. It is connected with the simulation target via the host-target communication interface.

The host enables the configuration and reconfiguration of the real-time operating system, probably supported by some graphical user interface.

### The Host-Target Communication Interface

The host-target communication interface connects the simulation host with the simulation target. In general, it is based on some wired or wireless connection (serial interface, Ethernet, Bluetooth, etc.) and standardized or proprietary communication protocols (e.g., ASAP1b⁶, L1⁷). It provides at least the following functionality:
- download of the simulation executable from the host to the simulation target and
- download of configuration data defining the real-time operating system's behavior.

⁶ The ASAP1b communication protocol has been standardized by the ASAM association.
⁷ The L1 communication protocol is proprietary to ETAS GmbH.

Further, it may provide functionality for
- controlling the experiment, e.g., for starting and stopping the simulation,
- monitoring and tracing the RT-OS behavior and internal states, or
- measuring signals and calibrating parameters of the control system, etc.

### The OS Reconfiguration API

The OS reconfiguration API runs on the simulation target and extends the RT-OS with reconfiguration functionality being accessible from outside the simulation executable. The reconfiguration API connects the RT-OS with the simulation host via the host-target communication interface.
- Before starting a simulation experiment, the initial OS configuration is downloaded from the host via the host-target communication interface and the reconfiguration API into the RT-OS.
- During a running experiment, the RT-OS performs scheduling and resource management as usual. The way this done is defined by the OS configuration.
- The RT-OS can be reconfigured after interrupting or even during a running simulation. Like this, OS settings can be altered on the fly, without perceptible delay.

### Alternatives

### Reconfiguration of Dynamically Configurable Operating Systems

For dynamically configurable RT-OS, presumably no reconfiguration API is required since its functionality is supposed to be part of the existing RT-OS API. In this case, the original RT-OS API merely needs to be connected with the host-target communication interface, such that the simulation host is able to access the RT-OS API.

### Product Relevance

Starting points could be
- the proportion of the turn-around times of an initial experiment preparation to a reconfiguration of the real-time behavior,
- the fact whether an experiment needs to be stopped and restarted for reconfiguration,
- the ability to alter the real-time behavior of the control system on the fly,
- the code being downloaded onto the simulation target, especially the OS configuration, and
- the communication protocols being used between host and target.

## Claims

1. A simulation system for computer-implemented simulation and verification of a control system for dynamic reconfiguration of a real time operating system on a rapid prototyping system.

2. A computer-implemented method for simulating and verifying a control system under development by means of a simulation system according to claim 1.

3. A computer program with program coding means which are suitable for carrying out a method according to claim 2, when the computer program is run on a computer.

4. A computer program product with a computer-readable medium and a computer program according to claim 3 stored on the computer-readable medium.
